# EUROPÄISCHE PATENTSCHRIFT

(11) **EP 0 762 608 B1**
(45) Veröffentlichungstag und Bekanntmachung des Hinweises auf die Patenterteilung: **28.04.1999**
(21) Anmeldenummer: 96112952.5
(22) Anmeldetag: 12.08.1996
(51) Int. Cl.: H02K 5/167, H02K 7/08, F16H 57/02

(54) **Motor-Getriebe-Antriebseinheit, insbesondere Kraftfahrzeug-Fensterheberantrieb oder dergleichen**
Geared motor-drive unit in particular vehicle window-winder or the like
Entraînement pour moto-réducteur notamment pour lêve-vitre d'un véhicule ou applications similaires

(30) Priorität: 25.08.1995 DE 29513700 U
(43) Veröffentlichungstag der Anmeldung: 12.03.1997
(73) Patentinhaber: SIEMENS AKTIENGESELLSCHAFT, 80333 München (DE)
(72) Erfinder: Klingler, Peter, Dipl.-Ing., 97277 Neubrunn (DE)

(56) Entgegenhaltungen:
- EP-A- 0 545 692
- GB-A- 2 086 145
- US-A- 3 302 048

## Beschreibung

Die Erfindung bezieht sich auf eine Motor-Getriebe-Antriebseinheit, insbesondere für einen Kraftfahrzeug-Fensterheberantrieb oder dergleichen, gemaß Anspruch 1; eine Motor-Getriebe-Antriebseinheit mit den Merkmalen a) und b) des Schutzanspruchs 1 ist durch die DE-U-81 28 186.2 bekannt. In diesem bekannten vorgenannten Fall ist für jedes Lager der Motor-Getriebe-Welle ein Kalottenlager vorgesehen.

Durch die EP-B1-0 608 452 ist eine weitere Antriebseinheit, insbesondere für einen elektromotorischen Kraftfahrzeug-Fensterheberantrieb, bekannt, bei der die Motor-Getriebe-Welle beiderseits eines getriebegehäuseseitigen Schneckenwellenabschnittes jeweils über ein Gleitlager in dem Getriebegehäuse - bei gleichzeitig fliegender Lagerung des Elektromotors auf dem motorgehäuseseitigen freien Ende der Motor-Getriebe-Welle - gelagert ist.

Das Dokument EP-A-0 545 692 beschreibt eine Halterung für ein Kalottenlager, die mit radial angeordneten elastischen Stegen versehen ist.

Gemäß Aufgabe vorliegender Erfindung soll der Fertigungs- und insbesondere Montageaufwand für eine Motor-Getriebe-Antriebseinheit, insbesondere für einen Kraftfahrzeug-Fensterheberantrieb oder dergleichen, wesentlich gemindert werden. Die Lösung dieser Aufgabe gelingt durch die Lehre des Anspruchs 1; vorteilhafte Ausgestaltungen der Erfindung sind jeweils Gegenstand der Unteransprüche.

Die erfindungsgemäße Lösung erlaubt trotz eines fertigungstechnisch vorteilhaften Getriebegehäuses aus Kunststoff anstelle eines Kalottenlagers ein einfach herzustellendes und zu montierendes Zylinderlager, das durch axiales Eindrücken ohne unerwünschte Spannungs-Überbeeanspruchungen für das Lager selbst bzw. die getriebegehäuseseitige Lageraufnahme im Preßsitz in diese Lageraufnahme auch unter Berücksichtigung maximaler Wärmedehnungskoeffizienten des metallenen Lagers einerseits und des kunststoffgespritzten Getriebegehäuses andererseits sicher positionier- und fixierbar ist. Durch die Anlage des Außenumfangs des Zylinderlagers an den erfindungsgemäß vorgesehenen radial vorstehenden Formstegen mit dazwischenliegenden Freiräumen kann einerseits bei Verwendung eines normalen Serien-Zylinderlagers eine hohe, auch Wärmedehnungen ausgleichende Anpreßkraft erreicht und andererseits trotzdem bei aufgrund der Herstellung als Massen-Serienartikels möglicherweise gegebener Übertoleranzen oder Wärmebelastungen eine zu starke Beanspruchung des Zylinderlagers selbst bzw. der Lageröffnung dadurch verhindert werden, daß die radial vorstehenden Formstege um ein geringes Maß elastisch federnd in die umfangsseitig zwischenliegenden Freiräume entweichen können.

Zur zusätzlichen, auch formschlüssigen axialen bzw. tangentialen Fixierung der betriebsmäßigen Endlagerung des Zylinderlagers in seiner Lageröffnung ist das Ausformen von axialen Anschlägen aus der Wandung der Lageröffnung im Getriebegehäuse nach dem Eindrücken des Zylinderlagers vorgesehen, wobei zweckmäßigerweise diese Anschläge in umfangsseitige nutartige Vertiefungen an der offenen axialen Stirnseite des Zylinderlagers derart eingedrückt sind, daß zusätzlich eine formschlüssige tangentiale Verdrehsicherung gewährleistet ist.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Längsschnitt eine Motor-Getriebe-Antriebseinheit für einen Kraftfahrzeug-Fensterheberantrieb;
- FIG 2: in perspektivischer Darstellung das unbestückte Getriebegehäuse der Motor-Getriebe-Antriebseinheit gemäß FIG 1;
- FIG 3: in vergrößerter Ausschnittdarstellung aus FIG 2 die axiale Draufsicht auf die zur Aufnahme des Zylinderlagers vorgesehene Lageröffnung;
- FIG 4: in vergrößerter Außenansichtdarstellung ein in die Lageröffnung gemäß FIG 3 axial einzudrückendes Zylinderlager;
- FIG 5: die stirnseitige Draufsicht auf das Zylinderlager gemäß FIG 4.

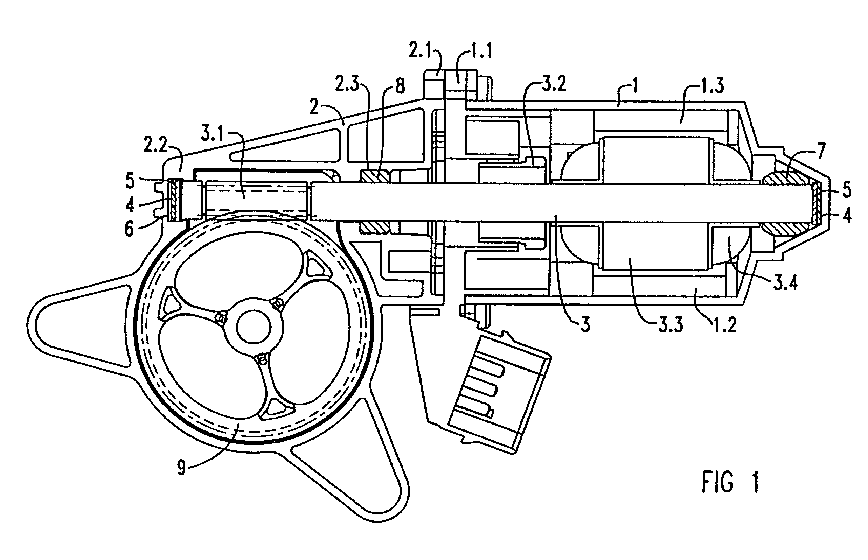

FIG 1 zeigt in einem axialen Längsschnitt eine Motor-Getriebe-Antriebseinheit für einen Kraftfahrzeug-Fensterheberantrieb mit einem topfförmigen Motorgehäuse 1, an dessen Stirnflansch 1.1 ein aus Kunststoff gespritztes Getriebegehäuse 2 mit einem korrespondierenden Stirnflansch 2.1 befestigt ist. Bei der gegenseitigen Montage von Motorgehäuse 1 und Getriebegehäuse 2 gleitet das Motorgehäuse 1 entlang getriebegehäuseseitig in einfacher Weise angespritzter Führungsstege 2.11 und wird in seiner Endlage an getriebegehäuseseitigen Befestigungsaugen 2.12 angeschraubt.

Eine in einem rechten motorgehäuseseitigen Wellenlager 7, insbesondere einem Kalottenlager, und in einem mittigen getriebegehäuseseitigen Wellenlager 8, insbesondere einem Zylinderlager gelagerte Motor-Getriebe-Welle 3 ist an ihrem linken freien, fliegend gelagerten Wellenende mit einer Schneckenwelle 3.1 versehen, die mit einem abtriebsseitigen Schneckenrad 9 kämmt. Am Umfang des topfförmigen Motorgehäuses 1 sind Erregermagnete 1.2;1.3 gehalten. Die Motor-Getriebe-Welle 3 nimmt in ihrem rechten motorseitigen Teil ein Rotorpaket 3.3 auf, in das eine Rotorwicklung 3.4 eingewickelt und in hier nicht näher dargestellter Weise an einen Kommutator 3.2 angeschlossen ist.

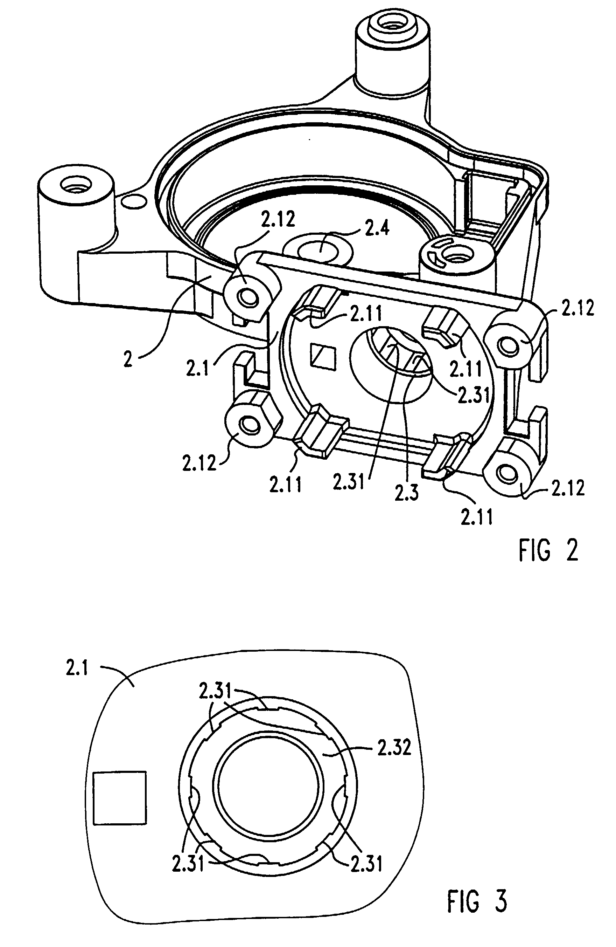

FIG 2 zeigt in perspektivischer Darstellung das noch unbestückte und noch nicht durch einen Getriebegehäusedeckel verschlossene Getriebegehäuse 2. An dem Stirnflansch 2.1 sind axial vorstehende Führungstege 2.11 zur geführten Montage des Motorgehäuses 1 sowie Befestigungsaugen 2.12 angespritzt, an denen das Motorgehäuse 1 mit seinem Stirnflansch 1.1 anschraubbar ist. In eine Aufnahme 2.4 wird eine Schneckenrad-Achse gehaltert, auf der das in FIG 1 dargestellte Schneckenrad 9 lagerbar ist.

Zur Sicherstellung eines definierten Axialspiels a für die Motor-Getriebe-Welle 3 ist axial vor jeder Stirnseite der Motor-Getriebe-Welle 3 ein elastisches scheibenförmiges Anlaufteil 4 vorgesehen, das einerseits mittelbar unter Zwischenlage einer formstabilen Stützscheibe 5 axial an die Stirnseite der Motor-Getriebe-Welle 3 andrückt und andererseits sich in der Gegenrichtung unmittelbar - gemäß der Darstellung am rechten Wellenende in FIG 1 - bzw. mittelbar über eine weitere formstabile Stützscheibe 6 - gemäß linkem Wellenende in FIG 1 - am Motorgehäuse 1 bzw. am Getriebegehäuse 2 abstützt. Das elastische scheibenförmige Anlaufteil 4 weist eine derartige Verformungs-Federcharakteristik auf, daß über einen dem definierten maximalen Axialspiel entsprechenden Verformungs-Federweg die Andruckkraft relativ gering und nahezu konstant verläuft und anschließend im Sinne einer unelastischen Anschlagbegrenzung stark ansteigt.

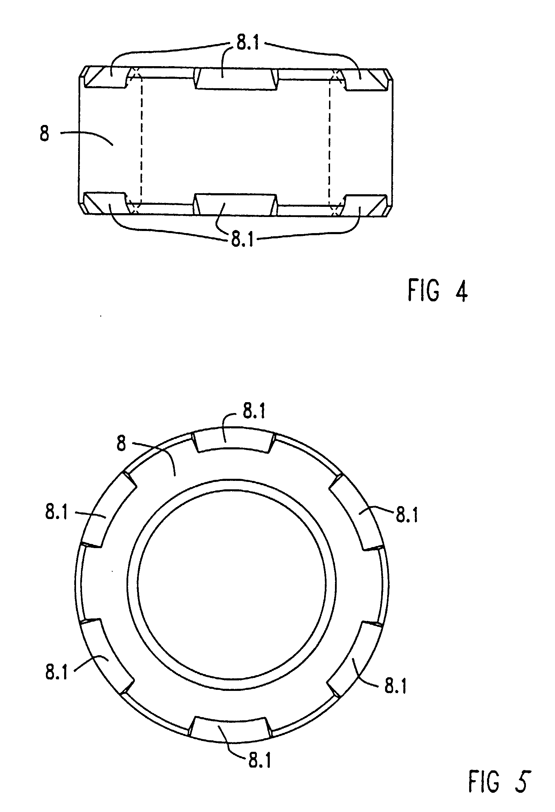

Das Zylinderlager 8 kann erfindungsgemäß in besonders einfacher Weise und gleichzeitig sicher dadurch im Getriebegehäuse 2 fixierbar montiert werden, daß - wie insbesondere aus FIG 2,3 ersichtlich - im Getriebegehäuse 2 eine axial motorgehäuseseitig beschickbare Lageröffnung 2.3 mit radial vorstehenden Formstegen 2.31 mit umfangsseitig zwischenliegenden Freiräumen eingeformt ist. In diese Lageröffnung 2.3 wird das in FIG 4,5 näher dargestellte Zylinderlager 8 mit hinreichendem radialen Übermaß zum radialen Abstandsmaß der Formstege 2.31 in gegenseitiger Preßsitzanlage axial bis zur Anlage an einer Anlageschulter 2.32 eingedrückt. Unerwünschte Drucküberbeanspruchungen des Zylinderlagers 8 einerseits bzw. der Wandung der Lageröffnung 2.3 andererseits sind dadurch vermeidbar, daß dabei das Material der Formstege 2.31 gegebenenfalls um ein geringes Maß in die umfangsseitig zwischenliegenden Freiräume ausweichen kann.

Zur zusätzlichen axialen Sicherung in Gegeneinsteckrichtung bzw. als Verdrehsicherung ist vorgesehen, an der dem Motorgehäuse 1 und damit der Eindrückseite zugewandten Stirnseite der Lageröffnung 2.3 nach dem Eindrücken des Zylinderlagers 8 die Wandung der Lageröffnung 2.3 um ein geringes Maß im Sinne eines axialen Anschlages, insbesondere mittels Heißverstemmen durch Ultraschallschweißen, zu verformen und dabei zur Anschlaganlage gegen die freie Stirnseite des Zylinderlagers 8 zu bringen. Eine axiale Anlagesicherung durch Heißverstemmen eines ein Zylinderlager aufnehmenden Lagerbügels ist z.B. durch die EP-B1-0 222 107, insbesondere FIG 5,6, bekannt.

Wie insbesondere aus FIG 4,5 ersichtlich, ist nach einer Ausgestaltung der Erfindung das Zylinderlager 8 umfangseitig zumindest an der der Einschubrichtung abgewandten Stirnseite mit nutartigen Vertiefungen 8.1 derart versehen, daß die zur axialen Fixierung aus der Wandung der Lageröffnung 2.3 ausgeformten, insbesondere lappenartigen, Anschläge in die nutartige Vertiefung 8.1 eingeformt werden und dadurch zusätzlich eine axiale Verdrehsicherung des Zylinderlagers 8 in seiner Lageröffnung 2.3 gewährleistet werden kann.

## Patentansprüche

1. Motor-Getriebe-Antriebseinheit, insbesondere für einen Kraftfahrzeug-Fensterheberantrieb oder dergleichen, mit einer Motor-Getriebe-Welle (3) mit folgenden Merkmalen:
a) Die Motor-Getriebe-Welle (3) ragt aus einer Öffnung eines Motorgehäuses (1) in ein am Motorgehäuse (1) anliegendes Getriebegehäuse (2);
b) die Motor-Getriebe-Welle (3) ist in einem ersten Lager, insbesondere Kalotten-Lager (7), in dem Motorgehäuse (1) gelagert;
c) die Motor-Getriebe-Welle (3) ist in einem zweiten Lager in Form eines Zylinderlagers (8) in dem Getriebegehäuse (2) gelagert;
d) das Getriebegehäuse (2) besteht aus einem Kunststoffteil mit einer axial beschickbaren Lageröffnung (2.3) mit umfangsseitig radial vorstehenden Formstegen (2.31) zur Aufnahme des Zylinderlagers (8);
e) das Zylinderlager (8) ist in Preßsitzanlage zu den Formstegen (2.31) axial in die Lageröffnung (2.3) eingedrückt.

2. Motor-Getriebe-Antriebseinheit nach Anspruch 1 mit dem Merkmal:
f) Das Zylinderlager (8) ist in Eindrückrichtung durch Anlage an eine Schulter der Lageröffnung (2.3) axial auch formschlüssig fixierbar.

3. Motor-Getriebe-Antriebseinheit nach Anspruch 1 und/oder 2 mit dem Merkmal:
g) Das Zylinderlager (8) ist in Gegen-Eindrückrichtung durch Anlage an zumindest einen aus der Wandung der Lageröffnung (2.3) nach dem Eindrücken des Zylinderlagers (8) ausgeformten Anschlag axial auch formschlüssig fixierbar.

4. Motor-Getriebe-Antriebseinheit nach zumindest einem der Ansprüche 1-3 mit dem Merkmal:
h) Das Zylinderlager (8) ist umfangsseitig, insbesondere stirnseitig, mit nutartigen Vertiefungen (8.1) versehen.

5. Motor-Getriebe-Antriebseinheit nach Anspruch 3 und 4 mit dem Merkmal:
i) Die aus der Wandung der Lageröffnung (2.3) ausgeformten Anschläge greifen im Sinne einer zusätzlichen formschlüssigen Verdrehsicherung des Zylinderlagers (8) in dessen nutartige Vertiefungen (8.1).

6. Motor-Getriebe-Antriebseinheit nach Anspruch 3 mit dem Merkmal:
j) Die Anschläge sind durch einen Stemm- bzw. Scheervorgang aus der Wandung der Lageröffnung (2.3) ausgeformt.

7. Motor-Getriebe-Antriebseinheit nach Anspruch 3 mit dem Merkmal:
k) Die Anschläge sind durch Heißverstemmen, insbesondere Ultraschweißen, aus der Wandung der Lageröffnung (2.3) ausgeformt.

8. Motor-Getriebe-Antriebseinheit nach zumindest einem der Ansprüche 1-7 mit dem Merkmal:
l) Das Zylinderlager (8) ist im motorgehäusenahen Teil des Getriebegehäuse (2) im Sinne einer fliegenden Lagerung des getriebeseitigen, insbesondere mit einer Schneckenwellen-Verzahnung (3.1) versehenen, Endes der Motor-Getriebe-Welle (3) angeordnet.

## Claims

1. Motor/gear drive unit, particularly for a motor-vehicle window lifter drive or the like, with a motor/ gear shaft (3) having the following features:
a) the motor/gear shaft (3) projects from an orifice of a motor housing (1) into a gear case (2) bearing on the motor housing (1);
b) the motor/gear shaft (3) is mounted in the motor housing (1) in a first bearing, particularly a cup bearing (7);
c) the motor/gear shaft (3) is mounted in the gear case (2) in a second bearing in the form of a cylindrical bearing (8);
d) the gear case (2) consists of a plastic part with an axially loadable bearing orifice (2.3) having circumferentially radially projecting shaped webs (2.31) for receiving the cylindrical bearing (8);
e) the cylindrical bearing (8) is pressed into the bearing orifice (2.3) axially in bearing contact with a press fit relative to the shaped webs (2.31).

2. Motor/gear drive unit according to Claim 1 having the feature:
f) the cylindrical bearing (8) can also be positively fixed axially in the press-in direction by bearing on a shoulder of the bearing orifice (2.3).

3. Motor/gear drive unit according to Claim 1 and/or 2 having the feature:
g) the cylindrical bearing (8) can also be positively fixed axially in the counter press-in direction by bearing on at least one stop formed out of the wall of the bearing orifice (2.3) after the cylindrical bearing (8) has been pressed in.

4. Motor/gear drive unit according to at least one of Claims 1 to 3 having the feature:
h) the cylindrical bearing (8) is provided circumferentially, particularly on the end face, with groove-like depressions (8.1).

5. Motor/gear drive unit according to Claims 3 and 4 having the feature:
i) the stops formed out of the wall of the bearing orifice (2.3) engage into the groove-like depressions (8.1) of the cylindrical bearing (8) with the effect of an additional positive prevention of the rotation of the latter.

6. Motor/gear drive unit according to Claim 3 having the feature:
j) the stops are formed out of the wall of the bearing orifice (2.3) by a calking or shearing operation.

7. Motor/gear drive unit according to Claim 3 having the feature:
k) the stops are formed out of the wall of the bearing orifice (2.3) by hot calking, particularly ultrasonic welding.

8. Motor/gear drive unit according to at least one of Claims 1 to 7 having the feature:
l) the cylindrical bearing (8) is arranged in that part of the gear case (2) located near the motor housing, with the effect of an overhung mounting of the gear-side end of the motor/gear shaft (3), said end being provided particularly with a worm shaft toothing (3.1).

## Revendications

1. Unité d'entraînement à motoréducteur, notamment pour l'entraînement d'un lève-vitre de véhicule automobile ou analogue, comportant un arbre (3) de motoréducteur et comprenant les caractéristiques suivantes :
a) l'arbre (3) de motoréducteur sort par une ouverture d'un carter (1) de moteur pour pénétrer dans un carter (2) de transmission appliqué contre le carter (1) de moteur,
b) l'arbre (3) de motoréducteur est monté dans le carter (1) de moteur dans un premier palier, notamment un palier (7) à calotte sphérique,
c) l'arbre (3) de motoréducteur est monté dans le carter (2) de transmission dans un deuxième palier sous la forme d'un palier (8) cylindrique,
d) le carter (2) de transmission est constitué d'une pièce en matière plastique pourvue d'une ouverture (2.3) de palier pouvant être chargée axialement et dotée de nervures (2.31) solidaires dépassant radialement sur la circonférence et destinées à recevoir le palier (8) cylindrique,
e) le palier (8) cylindrique est enfoncé axialement dans l'ouverture (2.3) de palier, en s'appliquant en ajustement serré contre les nervures (2.31) solidaires.

2. Unité d'entraînement à motoréducteur suivant la revendication 1, comprenant la caractéristique suivante :
f) le palier (8) cylindrique peut être, dans le sens d'enfoncement, également immobilisé axialement en position par engagement positif en s'appliquant contre un épaulement de l'ouverture (2.3) de palier.

3. Unité d'entraînement à motoréducteur suivant la revendication 1 et/ou 2, comprenant la caractéristique suivante :
g) le palier (8) cylindrique peut être, en sens contraire au sens d'enfoncement, également immobilisé axialement en position par engagement positif en s'appliquant contre au moins une butée formée à partir de la paroi de l'ouverture (2.3) de palier à la suite de l'enfoncement du palier (8) cylindrique.

4. Unité d'entraînement à motoréducteur suivant au moins l'une des revendications 1 à 3, comprenant la caractéristique suivante :
h) le palier (8) cylindrique est pourvu sur sa circonférence, notamment sur le côté frontal, de renfoncements (8.1) du genre rainures.

5. Unité d'entraînement à motoréducteur suivant les revendications 3 et 4, comprenant la caractéristique suivante :
i) les butées formées à partir de la paroi de l'ouverture (2.3) de palier s'engagent dans les renfoncements (8.1) du genre rainures du palier (8) cylindrique pour réaliser un blocage supplémentaire en rotation de ce dernier par engagement positif.

6. Unité d'entraînement à motoréducteur suivant la revendication 3, comprenant la caractéristique suivante :
j) les butées sont formées à partir de la paroi de l'ouverture (2.3) de palier par matage ou cisaillement.

7. Unité d'entraînement à motoréducteur suivant la revendication 3, comprenant la caractéristique suivante :
k) les butées sont formées à partir de la paroi de l'ouverture (2.3) de palier par matage à chaud, notamment par soudage aux ultrasons.

8. Unité d'entraînement à motoréducteur suivant au moins l'une des revendications 1 à 7, comprenant la caractéristique suivante :
I) le palier (8) cylindrique est disposé dans la partie du carter (2) de transmission qui est proche du carter de moteur, pour réaliser un montage flottant de l'extrémité côté transmission, notamment pourvue d'une denture (3.1) pour vis sans fin, de l'arbre (3) de motoréducteur.
